# EUROPEAN PATENT APPLICATION

(11) **EP 3 838 664 A1**
(43) Date of publication of application: **23.06.2021**
(21) Application number: 20214240.2
(22) Date of filing: 15.12.2020
(51) Int. Cl.: B60N 2/879, B60N 2/882

(54) **VEHICLE SEAT AND VEHICLE HEADREST**

(30) Priority: 18.12.2019 JP 2019228516
(71) Applicant: TOYOTA JIDOSHA KABUSHIKI KAISHA, Toyota-shi, Aichi-ken, 471-8571 (JP)
(72) Inventor: MIZOBATA, Hiroshi, TOYOTA-SHI, AICHI-KEN, 471-8571 (JP); BETSUGI, Ryuichi, TOYOTA-SHI, AICHI-KEN, 471-8571 (JP)
(74) Representative: Cabinet Beau de Loménie

(57) **Abstract**

A vehcile seat (10), comprising: a seat back (14) rotatably connected to an end portion at a seat rear side of a seat cushion; an electric power supply portion (36) provided at an outer face of the seat back (14); a headrest main body portion (16) removably attached to the seat back (14), an electronic apparatus being incorporated in the headrest main body portion (16), and the electronic apparatus being operable due to electric power being supplied thereto; and a power supply line (38) that extends from the headrest main body portion (16) and is connectable to the electric power supply portion (36).

## Description

### BACKGROUND

### Technical Field

The present disclosure relates to a seat for a vehicle and to a headrest for a vehicle.

### Related Art

Japanese Patent Application Laid-Open (JP-A) No. 2008-295597 discloses a headrest incorporating a film speaker that serve as an electronic apparatus. In the headrest recited in JP-A No. 2008-295597, one end side of a lead cable is connected to the film speaker and another end side of the lead cable is connected to an amplifier via the interior of a stay member.

In a case in which a vehicle seat is tilted in order to enlarge a luggage compartment or the like, an operation to detach a headrest from a seat back may be required. However, in the headrest recited in JP-A No. 2008-295597, because the lead cable extends from the headrest to the seat back through the stay member, it may not be easy to detach the headrest.

### SUMMARY

The present disclosure provides a vehicle seat and a vehicle headrest that, in a configuration in which an electronic apparatus is incorporated in a headrest main body portion, may enable easy detachment of the headrest.

A vehicle seat of a first aspect of the present disclosure includes: a seat back rotatably connected to an end portion at a seat rear side of a seat cushion; an electric power supply portion provided at an outer face of the seat back; a headrest main body portion removably attached to the seat back, an electronic apparatus being incorporated in the headrest main body portion, and the electronic apparatus being operable due to electric power being supplied thereto; and a power supply line that extends from the headrest main body portion and is connectable to the electric power supply portion.

In the first aspect of the present disclosure, the seat back is rotatably connected to the end portion at the seat rear side of the seat cushion. The electric power supply portion is provided at the outer face of the seat back. The headrest main body portion is removably attached to the seat back. The electronic apparatus is incorporated in the headrest main body portion, and the power supply line extends from the headrest main body portion. The power supply line may be connected to the electric power supply portion provided at the outer face of the seat back. Hence, electric power may be supplied from the electric power supply portion to the headrest main body portion via the power supply line.

Because the electric power supply portion is provided at the outer face of the seat back, the power supply line may be detached from the electric power supply portion easily.

In second aspect of the present disclosure, in the first aspect, a battery may be provided inside the headrest main body portion, and the battery may be chargeable by electric power supplied from the electric power supply portion via the power supply line.

In the second aspect of the present disclosure, the battery may be charged up, and the electronic apparatus incorporated in the headrest main body portion may be used even in a state in which the headrest is detached from the seat back.

In a third aspect of the present disclosure, in the first aspect or the second aspect, the electric power supply portion may include a connection port to which the power supply line is connectable, the connection port opening toward a side thereof at which the headrest main body portion is disposed.

In the third aspect of the present disclosure, because the connection port of the electric power supply portion opens to the side thereof at which the headrest main body portion is disposed, the power supply line extending from the headrest main body portion may be connected to the connection port easily.

In a fourth aspect of the present disclosure, in the third aspect, in addition to the connection port, the electric power supply portion may further include an other-apparatus connection port to which another electronic apparatus is connectable.

In the fourth aspect of the present disclosure, the electric power supply portion is equipped with the other apparatus connection port to which the another electronic apparatus may be connected. Thus, an electronic apparatus such as a smart phone carried by a vehicle occupant or the like may be charged.

In a fifth aspect of the present disclosure, in any one of the first to fourth aspects, the electric power supply portion may be provided at a face at the seat rear side of the seat back.

In the fifth aspect of the present disclosure, the electric power supply portion is provided at the face at the seat rear side of the seat back. Therefore, when the headrest is being detached from the seat back, the power supply line connected to the electric power supply portion may be detached easily, from the seat rear side of the seat back.
Moreover, when the headrest is being attached to the seat back, the power supply line may be connected to the electric power supply portion easily, from the seat rear side of the seat back.

In a sixth aspect of the present disclosure, in any one of the first to fourth aspects, the electric power supply portion may be provided at an outer side, in a seat width direction, of an upper end portion of the seat back relative to a region of attachment of the headrest main body portion.

In the sixth aspect of the present disclosure, relative to the region of attachment of the headrest main body portion at the upper end portion of the seat back, the electric power supply portion is provided at the seat width direction outer side. Consequently, the power supply line is connected to the electric power supply portion in a state in which the power supply line is pulled out from the headrest main body portion in the seat width direction. Therefore, even if an extra length of the power supply line is long due to a height level of the headrest main body portion being lowered, the power supply line flexes in the seat width direction. As a result, incidences of the power supply line impeding a rear seat occupant may be suppressed.

A seventh aspect of the present disclosure may further comprising a winding mechanism that retractably winds the power supply line.

In the seventh aspect of the present disclosure, the winding mechanism may be operated and an extra length portion of the power supply line may be wound thereon. Conversely, the power supply line may be unwound from the winding mechanism. Thus, the power supply line may be connected to the electric power supply portion even when a distance from the headrest main body portion to the electric power supply portion is far.

In an eighth aspect of the present disclosure, in any one of the first to seventh aspects, the electronic apparatus may include at least one of a speaker or a microphone.

In the eighth aspect of the present disclosure, when a speaker is incorporated at the headrest main body portion, sound may be outputted to a vehicle occupant without the provision of a separate speaker. Further, when a microphone is incorporated at the headrest main body portion, voice messages uttered by a vehicle occupant may be collected without the provision of a separate microphone.

A vehicle headrest of a ninth aspect of the present disclosure includes: a headrest main body portion removably attached to a seat back of a vehicle seat; an electronic apparatus incorporated in the headrest main body portion, the electronic apparatus being operable due to electric power being supplied thereto; and a power supply line that extends from the headrest main body portion and is connectable to an electric power supply portion provided at an outer face of the seat back.

In the ninth aspect of the present disclosure includes the headrest main body portion that is to be removably attached to a seat back. The electronic apparatus is incorporated in the headrest main body portion, and the power supply line extends from the headrest main body portion. The power supply line may be connected to the electric power supply portion provided at the outer face of the seat back. Hence, electric power may be supplied from the electric power supply portion to the headrest main body portion via the power supply line.

The power supply line may be easily detached from the electric power supply portion provided at the outer face of the seat back.

In the first aspect of the present disclosure, a headrest that may be easily detached may be provided in a configuration in which an electronic apparatus is incorporated in a headrest main body portion.

In the second aspect of the present disclosure, a range of uses of the headrest may be broadened.

In the third aspect of the present disclosure, the power supply line may be connected and detached easily.

In the fourth aspect of the present disclosure, charging of another apparatus may be conducted easily.

In the fifth aspect of the present disclosure, mounting and removal of the headrest may be carried out efficiently.

In the sixth aspect of the present disclosure, comfort of a vehicle occupant sitting on a rear seat may be excellently maintained.

In the seventh aspect of the present disclosure, design characteristics of the headrest may be improved, in addition to which the power supply line may be connected to the electric power supply portion even when the headrest main body portion and the electric power supply portion are apart.

In the eighth aspect of the present disclosure, a number of electronic apparatuses provided in the vehicle may be reduced.

In the ninth aspect of the present disclosure, a headrest that may be easily detached may be provided in a configuration in which an electronic apparatus is incorporated in a headrest main body portion.

### BRIEF DESCRIPTION OF THE DRAWINGS

Exemplary embodiments of the present disclosure will be described in detail based on the following figures, wherein:
Fig. 1 is a perspective view, seen diagonally from a seat front-left side, illustrating an upper portion of a vehicle seat equipped with a vehicle headrest according to a first exemplary embodiment;
Fig. 2 is a side view, seen from the seat left side, of principal portions of the vehicle seat according to the first exemplary embodiment;
Fig. 3 is a schematic view illustrating a winding mechanism provided at the vehicle headrest according to the first exemplary embodiment;
Fig. 4 is a side view, corresponding to Fig. 2, illustrating principal portions of a vehicle seat equipped with a vehicle headrest according to a second exemplary embodiment;
Fig. 5 is a rear view, seen from the seat rear side, illustrating an upper portion of the vehicle seat according to the second exemplary embodiment; and
Fig. 6 is a rear view, seen from the seat rear side, illustrating a variant example of the vehicle seat.

### DETAILED DESCRIPTION

### First Exemplary Embodiment

A vehicle seat 10 at which a vehicle headrest 12 according to a first exemplary embodiment is employed is described with reference to the drawings. The arrow FR, arrow UP and arrow RH that are marked as appropriate in the drawings indicate, respectively, a seat front side, seat upper side and seat right side of the vehicle seat 10. Herebelow, where descriptions are given using the directions front, rear, upper, lower, left and right, unless particularly specified, these represent the front and rear in the seat front-and-rear direction, upper and lower in the seat vertical direction, and left and right in the seat width direction.

The vehicle seat 10 according to the present exemplary embodiment is provided with a seat cushion, which is not illustrated in the drawings. The seat cushion is structured to be capable of supporting the buttock area and thigh area of a vehicle occupant sitting on the vehicle seat 10 from the seat lower side.

A lower end portion of a seat back 14 is rotatably connected to an end portion at the seat rear side of the seat cushion. The seat back 14 extends in the seat vertical direction. The lower end portion of the seat back 14 is connected to the seat cushion that is not illustrated in the drawings.

Side support portions 14A are provided at two seat width direction end portions of the seat back 14. The side support portions 14A project to the seat front side from the two seat width direction end portions of the seat back 14. The side support portions 14A are formed in shapes that enfold side portions of the vehicle occupant sitting on the vehicle seat 10 in the seat width direction.

As an example in the present exemplary embodiment, the seat back 14 may be tilted by the seat back 14 being turned relative to the seat cushion that is not illustrated in the drawings. The vehicle seat is structured such that, by the seat back 14 being tilted, the seat cushion that is not illustrated in the drawings and the seat back 14 are made substantially coplanar in a "full-flat" state.

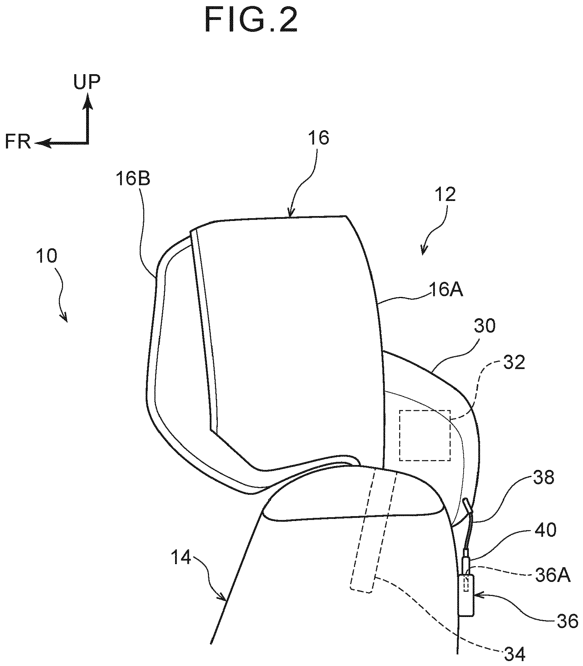

As illustrated in Fig. 2, an electric power supply portion 36 is provided at an outer face of the seat back 14. As an example, the electric power supply portion 36 according to the present exemplary embodiment is provided at a face at the seat rear side of the seat back 14, and is equipped with a connection port 36A that opens toward the seat upper side, which is to say the side of the electric power supply portion 36 at which a headrest main body portion 16 is disposed. A power supply line 38, which is described below, is connectable to the connection port 36A. The electric power supply portion 36 is electronically connected to a power source, which is not illustrated in the drawings, installed in the vehicle.

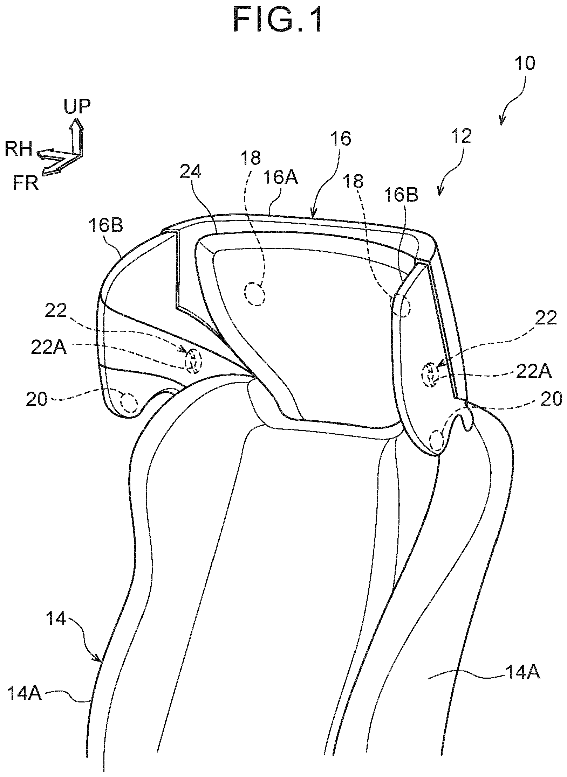

As illustrated in Fig. 1, the vehicle headrest 12 is provided at an upper end portion of the seat back 14. The vehicle headrest 12 according to the present exemplary embodiment includes the headrest main body portion 16, speakers 18 that serve as an electronic apparatus, microphones 20 that serve as the electronic apparatus, aroma release devices 22, a battery 32, a winding mechanism 42, and the power supply line 38.

The headrest main body portion 16 is provided with a base portion 16A that extends in the seat width direction and is capable of supporting the head area of the vehicle occupant from the seat rear side. The base portion 16A is formed substantially in a board shape with a thickness direction in the seat front-and-rear direction. A cushion member 24 is attached to a face at the seat front side of the base portion 16A. The cushion member 24 is formed with, for example, a pad provided with air permeability or the like.

The speakers 18 are provided inside the base portion 16A. The speakers 18 are disposed at each of two seat width direction end portions of the base portion 16A. Each speaker 18 is electronically connected with a speaker amplifier, which is not illustrated in the drawings, incorporated in the headrest main body portion 16. When the speakers 18 are supplied with electric power, the speakers 18 operate, converting inputted electronic signals to sound and outputting the sound.

Side portions 16B project to the seat front side from the two seat width direction end portions of the base portion 16A. The side portions 16B are formed so as to enfold the head area of the vehicle occupant from both sides in the seat width direction. As an example in the present exemplary embodiment, the base portion 16A and the side portions 16B are connected via hinges, which are not illustrated in the drawings, such that angles of the side portions 16B relative to the base portion 16A may be manually adjusted. Thus, when the vehicle occupant wishes to conceal their face, the side portions 16B may be moved toward the seat width direction inner sides thereof. On the other hand, when the vehicle occupant wishes to communicate with a nearby vehicle occupant, the side portions 16B may be moved toward the seat width direction outer sides thereof.

The microphones 20 are provided in each of the left and right pair of side portions 16B. Each microphone 20 is disposed at a lower end portion of the side portion 16B. The microphone 20 is electronically connected with a microphone amplifier, which is not illustrated in the drawings, incorporated in the headrest main body portion 16. When the microphones 20 are supplied with electric power, the microphones 20 operate, collecting voice messages uttered by the vehicle occupant sitting on the vehicle seat 10 and converting the voice messages to electronic signals to acquire the voice messages.

The aroma release devices 22 are provided at the side portions 16B, at the seat rear side relative to the microphones 20. Each aroma release device 22 is provided with a fan 22A that blows air to the seat width direction inner side thereof. An aromatic substance accommodation portion, which is not illustrated in the drawings, is provided at the aroma release device 22. In a state in which an aromatic substance is accommodated in the aromatic substance accommodation portion, electric power is supplied to the fan 22A and the fan 22A is operated. Thus, an aroma is released to the side thereof at which the vehicle occupant is disposed.

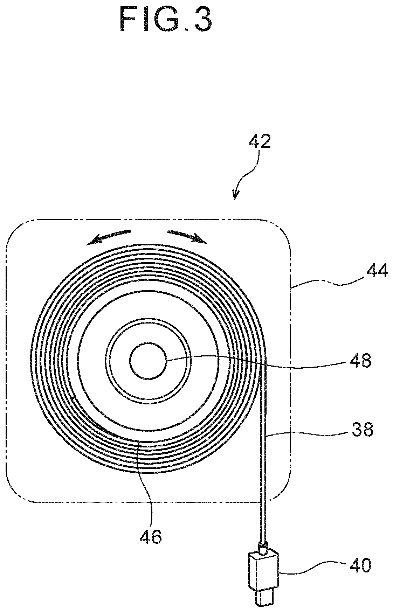

As illustrated in Fig. 2, a battery accommodation case 30 is provided at a face at the seat rear side of the base portion 16A of the headrest main body portion 16. The battery accommodation case 30 is fixed to the base portion 16A. The battery 32 and the winding mechanism 42 (see Fig. 3) are accommodated inside the battery accommodation case 30. A Bluetooth (registered trademark) receiver is accommodated in the battery accommodation case 30, such that signals may be received from an external communications terminal by wireless.

The battery 32 is configured to be capable of charging up when electric power is supplied thereto. The speakers 18, microphones 20 and fans 22A are electronically connected to the battery 32. The power supply line 38 extends outside the headrest main body portion 16 from the battery 32. As an example in the present exemplary embodiment, the power supply line 38 extending from the battery 32 extends to the outside of the headrest main body portion 16 via the winding mechanism 42 (see Fig. 3).

The power supply line 38 extends toward the seat lower side from a rear face of the battery accommodation case 30. A connector 40 is provided at the distal end of the power supply line 38. The connector 40 may be inserted into the connection port 36A of the electric power supply portion 36. Thus, the power supply line 38 is connected to the electric power supply portion 36 via the connector 40. Hence, when electric power is supplied from the electric power supply portion 36 to the battery 32 via the power supply line 38, the battery 32 is charged up. As an example, the battery 32 according to the present exemplary embodiment is equipped with a pass-through function. Therefore, charging of the battery 32 and operation of the electronic apparatus may be conducted simultaneously.

The winding mechanism 42 is accommodated in the battery accommodation case 30 together with the battery 32. As illustrated in Fig. 3, the winding mechanism 42 is structured so as to retractably wind up a length of the power supply line 38. The winding mechanism 42 is equipped with a spindle 48 that is fixed to a frame 44. A spool 46 in a substantially cylindrical shape is rotatably attached to the spindle 48. The power supply line 38 is wound onto an outer periphery face of the spool 46.

When the side of the power supply line 38 at which the connector 40 is provided is pulled, the spool 46 of the winding mechanism 42 rotates and the power supply line 38 is unwound. A button, which is not illustrated in the drawings, is provided at the winding mechanism 42. When this button is pressed in a state in which the power supply line 38 has been unwound, the spool 46 rotates in a winding direction and takes up the power supply line 38.

As illustrated in Fig. 2, headrest stays 34 extend to the seat lower side from the headrest main body portion 16. The headrest stays 34 are formed in substantially cylindrical shapes and are provided as a left and right pair. Insertion holes into which the headrest stays 34 may be inserted are formed in the upper end portion of the seat back 14. The headrest main body portion 16 is mounted at the seat back 14 by the headrest stays 34 being inserted into these insertion holes. Thus, the vehicle headrest 12 according to the present exemplary embodiment is removably attached to the seat back 14. The headrest stays 34 are structured such that the headrest stays 34 may be locked at arbitrary positions. Thus, a height level of the vehicle headrest 12 may be adjusted to match a height level of the head area of the vehicle occupant.

### Operation

Now, operation of the present exemplary embodiment is described.

In the vehicle seat 10 at which the vehicle headrest 12 according to the present exemplary embodiment is employed, the power supply line extends from the headrest main body portion 16, and the power supply line 38 is connectable to the electric power supply portion 36 provided at the outer face of the seat back 14. Therefore, electric power may be supplied from the electric power supply portion 36 to the headrest main body portion 16 via the power supply line 38.

Because the power supply line 38 is connected to the electric power supply portion 36 provided at the outer face of the seat back 14, the power supply line 38 may be detached from the electric power supply portion 36 easily. Thus, the vehicle headrest 12 that may be easily detached may be provided in the configuration in which the electronic apparatus is incorporated in the headrest main body portion 16.

In the present exemplary embodiment, the electric power supply portion 36 is provided at the face at the seat rear side of the seat back 14. Therefore, when the vehicle headrest 12 is being detached from the seat back 14, the power supply line 38 connected to the electric power supply portion 36 may be detached easily, from the seat rear side of the seat back 14. Moreover, when the vehicle headrest 12 is being attached to the seat back 14, the power supply line 38 may be connected to the electric power supply portion 36 easily, from the seat rear side of the seat back 14. Thus, mounting and removal of the vehicle headrest 12 may be carried out efficiently.

In particular, in a vehicle that is equipped with the vehicle seat 10 whose seat back 14 may be tilted and put into the full-flat state as in the present exemplary embodiment, there may be occasions on which an operation to detach the vehicle headrest 12 is necessary. On these occasions, the vehicle headrest 12 may be detached from the seat back 14 easily.

In the present exemplary embodiment, the chargeable battery 32 is provided. Therefore, the battery 32 may be charged up, and the electronic apparatus such as the speakers 18 and the like incorporated in the headrest main body portion 16 may be used even in the state in which the vehicle headrest 12 is detached from the seat back 14. As a result, a range of uses of the vehicle headrest 12 may be broadened. For example, the vehicle headrest 12 may be detached from the seat back 14 and taken out of the vehicle and, in this state, play music from the speakers 18.

In the present exemplary embodiment, because the connection port 36A of the electric power supply portion 36 opens toward the side thereof at which the headrest main body portion 16 is disposed, the power supply line 38 extending from the headrest main body portion 16 may be connected to the connection port 36A easily. As a result, the power supply line 38 may be connected and detached easily. Furthermore, because the power supply line 38 is pulled out from the headrest main body portion 16 and connected to the connection port 36A in a substantially linear state, a deterioration in appearance may be suppressed, and incidences of the body of a vehicle occupant catching on the power supply line 38 may be suppressed.

In the present exemplary embodiment, because the winding mechanism 42 is provided, the winding mechanism 42 may be operated and an extra length portion of the power supply line 38 may be taken up. Conversely, the power supply line 38 may be unwound from the winding mechanism 42. Thus, the power supply line 38 may be connected to the electric power supply portion 36 even when a distance from the headrest main body portion 16 to the electric power supply portion 36 is far. For example, the distance from the headrest main body portion 16 to the electric power supply portion 36 is further when the height level of the headrest main body portion 16 is higher. In this situation, the power supply line 38 may be connected to the electric power supply portion 36 by only a required length of the power supply line 38 being pulled out from the winding mechanism 42. Therefore, design characteristics of the vehicle headrest 12 may be improved, in addition to which the power supply line 38 may be connected to the electric power supply portion 36 even when the headrest main body portion 16 and the electric power supply portion 36 are apart.

In the present exemplary embodiment, when the speakers 18 are incorporated in the headrest main body portion 16, sound may be outputted to a vehicle occupant without the provision of a separate speaker. Further, when the microphones 20 are incorporated in the headrest main body portion 16, voice messages uttered by the vehicle occupant may be collected without the provision of a separate microphone. Therefore, a number of electronic apparatuses provided in the vehicle may be reduced.

### Second Exemplary Embodiment

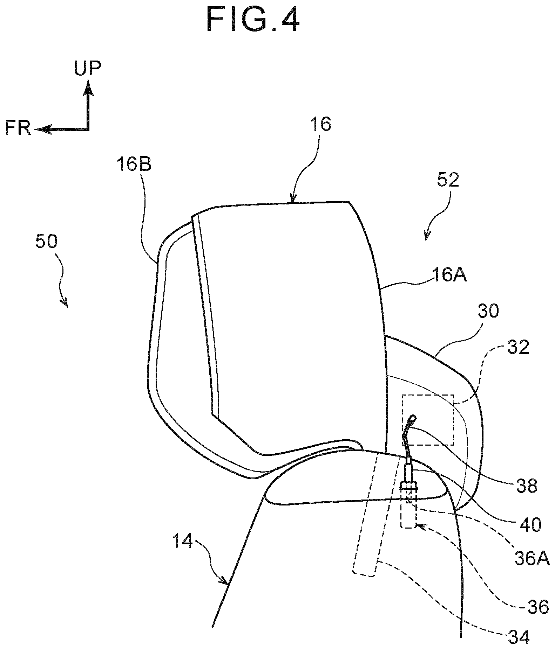

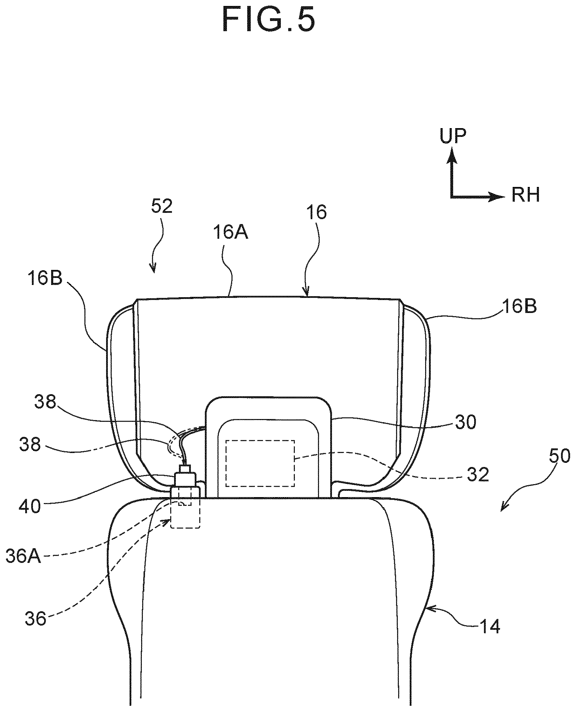

Now, a vehicle seat 50 at which a vehicle headrest 52 according to a second exemplary embodiment is employed is described with reference to Fig. 4 and Fig. 5. Structures that are the same as in the first exemplary embodiment are assigned the same reference symbols and, as appropriate, are not described.

As illustrated in Fig. 4 and Fig. 5, the vehicle seat 50 at which the vehicle headrest 52 according to the present exemplary embodiment is employed differs from the first exemplary embodiment in the position of the electric power supply portion 36. That is, the electric power supply portion 36 according to the present exemplary embodiment is provided at a seat width direction outer side of the upper end portion of the seat back 14.

More specifically, the electric power supply portion 36 is provided at the seat left side of the seat back 14 relative to a region of attachment of the headrest main body portion 16. Apart from an upper end portion of the electric power supply portion 36, the electric power supply portion 36 is embedded in the seat back 14.

The electric power supply portion 36 is provided with the connection port 36A, which opens toward the seat upper side. The power supply line 38 is connectable to the connection port 36A. The electric power supply portion 36 is electronically connected to the power source, not illustrated in the drawings, that is installed in the vehicle.

The battery 32 is accommodated in the battery accommodation case 30 of the vehicle headrest 52, and the power supply line 38 extends outside the headrest main body portion 16 from the battery 32.

The power supply line 38 according to the present exemplary embodiment extends toward the lower-left side from a side face at the left side of the battery accommodation case 30. The connector 40 provided at the distal end of the power supply line 38 may be connected to the connection port 36A of the electric power supply portion 36.

### Operation

Now, operation of the present exemplary embodiment is described.

In the vehicle seat 50 according to the present exemplary embodiment, the electric power supply portion 36 is provided at the seat left side of the upper end portion of the seat back 14 relative to the region of attachment of the headrest main body portion 16. Consequently, the power supply line 38 is connected to the electric power supply portion 36 in a state in which the power supply line 38 is pulled out from the headrest main body portion 16 in the seat width direction. Therefore, even if an extra length of the power supply line is long due to the height level of the headrest main body portion 16 being lowered, the power supply line 38 flexes in the seat width direction in the manner of the power supply line 38 depicted by two-dot chain lines. As a result, incidences of the power supply line 38 impeding a rear seat occupant may be suppressed. Consequently, comfort of a vehicle occupant sitting on a rear seat may be excellently maintained. Other operations are similar to the first exemplary embodiment.

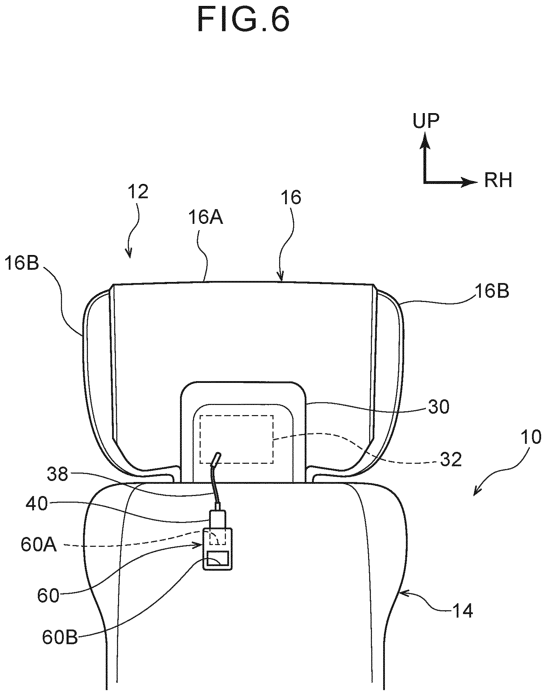

In the first exemplary embodiment and second exemplary embodiment described above, structures are described in which one of the connection port 36A is formed at the electric power supply portion 36. However, this is not limiting; a structure according to a variant example illustrated in Fig. 6 may be employed.

### Variant Example

In the present variant example as illustrated in Fig. 6, an electric power supply portion 60 is provided instead of the electric power supply portion 36. Similarly to the first exemplary embodiment, the electric power supply portion 60 is provided at the face at the seat rear side of the seat back 14. The electric power supply portion 60 is provided with a connection port 60A that opens toward the seat upper side.

The electric power supply portion 60 is provided with, in addition to the connection port 60A, an other apparatus connection port 60B at which another electronic apparatus is connectable. The other apparatus connection port 60B opens toward the seat rear side and is formed in a shape that corresponds with a charging cable for a portable terminal such as a smartphone or the like.

Because the electric power supply portion 60 is equipped with the other apparatus connection port 60B in the present variant example as described above, an electronic apparatus such as a smartphone carried by a vehicle occupant or the like may be charged up. That is, charging of another apparatus may be conducted easily.

In particular, when the other apparatus connection port 60B opens toward the seat rear side as in the present variant example, a vehicle occupant sitting on a seat behind the vehicle seat 10 may easily use the other apparatus connection port 60B. Note that a table or holder for placing an electronic apparatus such as a smartphone or the like on may be provided below the electric power supply portion 60. Accordingly, there is no need for the vehicle occupant to continue holding the electronic apparatus in their hand during charging.

Above, vehicle seats 10 and 50 at which vehicle headrests 12 and 52 according to the first exemplary embodiment, the second exemplary embodiment and the variant example are employed are described, but it will be clear that numerous embodiments are possible within a scope not departing from the gist of the present disclosure. For example, in the exemplary embodiments described above, the battery 32 is provided inside the headrest main body portion 16 but this is not limiting; a headrest main body portion in which the battery 32 is not incorporated may be employed. In this case, the electronic apparatus may be used only in the state in which the power supply line 38 is connected to the electric power supply portion 36. This vehicle headrest may be lower in weight than a structure incorporating the battery 32.

In the exemplary embodiments described above, structures are described in which, as illustrated in Fig. 1, the speakers 18, the microphones 20 and the fans 22A of the aroma release devices 22 that serve as the electronic apparatus are incorporated in the headrest main body portion 16, but this is not limiting. For example, a structure is possible in which only the speakers 18 are incorporated in the headrest main body portion 16. Conversely, the headrest main body portion 16 that is employed may incorporate other electronic apparatus in addition to the speakers 18, the microphones 20 and the aroma release devices 22; a structure is possible in which motors for driving the side portions 16B of the headrest main body portion 16 are incorporated.

In the exemplary embodiments described above, structures are described in which one of the connection port 36A is provided at the electric power supply portion 36, and the connection port 60A and other apparatus connection port 60B are provided in the variant example, but this is not limiting. For example, structures may be employed in which three or more connection ports are formed at the electric power supply portion 36. Further, structures may be employed in which the electric power supply portion 36 is provided at plural locations of the seat back 14.

Alternative structures are possible, provided that the electric power supply portion 36 is a structure to which the power supply line 38 may be connected and that may supply electric power. That is, a structure is possible in which a protruding connection portion is provided instead of the connection port 36A. In this case, a recess portion may be formed in the connector 40 at the distal end of the power supply line 38 and the power supply line 38 may be connected to the electric power supply portion 36.

In the exemplary embodiments described above, the winding mechanism 42 illustrated in Fig. 3 is employed, but this is not limiting. That is, an alternative winding mechanism may be employed provided that the alternative winding mechanism is capable of taking up the power supply line 38. For example, a structure is possible in which the power supply line 38 is wound and unwound by a motor being driven and the spool 46 being rotated. In this structure, control may be performed so as to apply a constant tension to the power supply line 38. Thus, the length of the power supply line 38 may be automatically adjusted even when the headrest main body portion 16 is raised or lowered.

In the exemplary embodiments described above, the height level of the headrest main body portion 16 is adjustable, but this is not limiting. That is, a structure is possible in which the height level of the headrest main body portion 16 relative to the seat back 14 cannot be adjusted. In this structure, because the distance from the headrest main body portion 16 to the electric power supply portion 36 does not vary, the winding mechanism 42 may be omitted.

## Claims

1. A vehicle seat (10, 50), comprising:
a seat back (14) rotatably connected to an end portion at a seat rear side of a seat cushion;
an electric power supply portion (36, 60) provided at an outer face of the seat back (14);
a headrest main body portion (16) removably attached to the seat back (14), an electronic apparatus (18, 20, 22A) being incorporated in the headrest main body portion (16), and the electronic apparatus being operable due to electric power being supplied thereto; and
a power supply line (38) that extends from the headrest main body portion (16) and is connectable to the electric power supply portion (36, 60).

2. The vehicle seat (10, 50) of claim 1, wherein:
a battery (32) is provided inside the headrest main body portion (16), and
the battery (32) is chargeable by electric power supplied from the electric power supply portion (36) via the power supply line (38).

3. The vehicle seat (10, 50) of claim 1 or claim 2, wherein the electric power supply portion (36, 60) includes a connection port (36A, 60A) to which the power supply line (38) is connectable, the connection port (36A, 60A) opening toward a side thereof at which the headrest main body portion (16) is disposed.

4. The vehicle seat (10) of claim 3 wherein, in addition to the connection port (60A), the electric power supply portion (60) further includes an other-apparatus connection port (60B) to which another electronic apparatus is connectable.

5. The vehicle seat (10) of any one of claims 1 to 4, wherein the electric power supply portion (36, 60) is provided at a face at the seat rear side of the seat back (14).

6. The vehicle seat (50) of any one of claims 1 to 4, wherein the electric power supply portion (36) is provided at an outer side, in a seat width direction, of an upper end portion of the seat back (14) relative to a region of attachment of the headrest main body portion (16).

7. The vehicle seat (10, 50) of any one of claims 1 to 6, further comprising a winding mechanism (42) that retractably winds the power supply line (38).

8. The vehicle seat (10, 50) according to any one of claims 1 to 7, wherein the electronic apparatus includes at least one of a speaker (18) or a microphone (20).

9. A vehicle headrest (12, 52), comprising:
a headrest main body portion (16) configured to be removably attached to a seat back of a vehicle seat (10, 50);
an electronic apparatus (18, 20, 22A) incorporated in the headrest main body portion (16), the electronic apparatus being operable due to electric power being supplied thereto; and
a power supply line (38) that extends from the headrest main body portion (16) and is configured to be connectable to an electric power supply portion (36) provided at an outer face of the seat back (14).

10. The vehicle headrest (12, 52) of claim 9, wherein the electronic apparatus includes at least one of a speaker (18) or a microphone (20).
